(19) Europäisches Patentamt / European Patent Office / Office européen des brevets

(11) **EP 1 309 140 B1**

(12) **FASCICULE DE BREVET EUROPEEN**

(45) Date de publication et mention
de la délivrance du brevet:
**09.04.2008 Bulletin 2008/15**

(51) Int Cl.:
***H04L 12/56*** *(2006.01)*

(21) Numéro de dépôt: **02292703.2**

(22) Date de dépôt: **30.10.2002**

(54) **Procédé de vérification du comportement déterministe d'un réseau à commutation de paquet**

Verfahren zur Verifizierung des deterministischen Verhaltens eines paketvermittelten Netzwerks

Method for verification of the deterministic behaviour of a packet switched network

(84) Etats contractants désignés:
**DE ES GB IT**

(30) Priorité: **05.11.2001 FR 0114261**

(43) Date de publication de la demande:
**07.05.2003 Bulletin 2003/19**

(73) Titulaire: **AIRBUS France
31060 Toulouse Cedex 03 (FR)**

(72) Inventeurs:
• **Saint Etienne, Jean-François
31270 Cugnaux (FR)**
• **Lopez, Juan
31300 Toulouse (FR)**
• **Portes, Dominique
31320 Auzeville Tolosane (FR)**
• **Gambardella, Eddie
31700 Blagnac (FR)**
• **Pasquier, Bruno
31530 Thil (FR)**
• **Almeida, Philippe
31270 Cugnaux (FR)**

(74) Mandataire: **Poulin, Gérard et al
BREVALEX
3, rue du Docteur Lancereaux
75008 Paris (FR)**

(56) Documents cités:
• **CHIA-SHENG CHANG ET AL: "Guaranteed quality-of-service wireless medium access by packet-by-packet generalized processor sharing algorithm" COMMUNICATIONS, 1998. ICC 98. CONFERENCE RECORD. 1998 IEEE INTERNATIONAL CONFERENCE ON ATLANTA, GA, USA 7-11 JUNE 1998, NEW YORK, NY, USA, IEEE, US, 7 juin 1998 (1998-06-07), pages 493-497, XP010284560 ISBN: 0-7803-4788-9**
• **CRUZ R L: "SCED+: efficient management of quality of service guarantees" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA, IEEE, US, 29 mars 1998 (1998-03-29), pages 625-634, XP010270386 ISBN: 0-7803-4383-2**
• **BENNETT J C R ET AL: "Delay jitter bounds and packet scale rate guarantee for expedited forwarding" PROCEEDINGS IEEE INFOCOM 2001. CONFERENCE ON COMPUTER COMMUNICATIONS. TWENTIETH ANNUAL JOINT CONFERENCE OF THE IEEE COMPUTER AND COMMUNICATIONS SOCIETY (CAT. NO. 01CH37213), PROCEEDINGS IEEE INFOCOM 2001. CONFERENCE ON COMPUTER COMMUNICATIONS. TWENTIE, pages 1502-1509 vol.3, XP002208598 2001, Piscataway, NJ, USA, IEEE, USA ISBN: 0-7803-7016-3**
• **CRUZ R L: "A CALCULUS FOR NETWORK DELAY, PART II: NETWORK ANALYSIS" IEEE TRANSACTIONS ON INFORMATION THEORY, IEEE INC. NEW YORK, US, vol. 37, no. 1, 1991, pages 132-141, XP000168859 ISSN: 0018-9448**

- **CRUZ R L: "A CALCULUS FOR NETWORK DELAY, PART I: NETWORK ELEMENTS IN ISOLATION" IEEE TRANSACTIONS ON INFORMATION THEORY, IEEE INC. NEW YORK, US, vol. 37, no. 1, 1991, pages 114-131, XP000168858 ISSN: 0018-9448**

## Description

### Domaine technique

La présente invention concerne un procédé de vérification du comportement déterministe d'un réseau à commutation de paquets, notamment dans le domaine avionique.

### Etat de la technique antérieure

Les procédés décrits dans les documents de l'art connu, référencés [1], [2] et [3] en fin de description, sont basés sur des considérations statistiques qui sont adaptées aux réseaux de télécommunication terrestres mais qui sont difficilement acceptables dans un avion.

La présente invention a pour objet de permettre de vérifier qu'un réseau à commutation de paquets a bien un fonctionnement déterministe, notamment dans le domaine avionique.

### Exposé de l'invention

L'invention propose un procédé de vérification du comportement déterministe d'un réseau à commutation de paquets comprenant des stations abonnés reliées entre elles au travers d'au moins un commutateur, un tel comportement étant dit déterministe au sens que tout paquet émis sur le réseau à partir d'une station abonné source rejoint la (ou les) station(s) abonné(s) destinataire(s) avec une durée qui est bornée dans le temps, caractérisé en ce que l'on vérifie l'inégalité suivante pour chaque port de sortie de chaque commutateur du réseau :

$$\sum_{\substack{i=\text{nombre de liens virtuels}\\ \text{traversant le buffer}}} \left[1+\text{int}\left(\frac{(\text{Jitter In})_i+\text{Latence max}}{\text{BAG}_i}\right)\right]*(\text{durée trame max})_i \leq \text{Latence max}$$

dans laquelle :

- la valeur Latence max est la durée maximale de résidence dans le buffer de sortie d'un commutateur, cette valeur pouvant être différente pour chaque commutateur du réseau.
- $\text{BAG}_i$ représente le temps minimum séparant deux trames consécutives appartenant à un lien virtuel i, et ce avant leur émission sur le support physique.
- $(\text{Jitter In})_i$ est le Jitter associé à un lien virtuel i, qui représente l'intervalle de temps entre l'instant théorique d'émission d'une trame et son émission effective qui peut être avant ou après l'instant théorique,
- $(\text{durée trame max})_i$ est la durée de la trame la plus longue sur le lien virtuel i.

Dans un autre mode de réalisation on ajoute les liens virtuels un à un, en vérifiant après chaque ajout d'un lien virtuel que le fonctionnement de l'ensemble du réseau reste bien déterministe.

Dans le domaine avionique, l'invention permet de répondre à une exigence de sécurité primordiale lors du transport d'informations sur un avion, appelée "déterminisme". En effet, il est indispensable lorsqu'une donnée est envoyée à un destinataire qu'elle soit effectivement reçue dans un délai maximal qui soit connu.

Le procédé de l'invention présente l'avantage d'être extrêmement simple d'utilisation (une seule équation par port de sortie). Elle est analytique et ne demande que très peu d'informations sur les caractéristiques du réseau (latence maximum par commutateur, BAG, et gigue des abonnés).

L'invention est utile pour tous les réseaux à commutation de paquets dont on exige un certain niveau de qualité de service en terme de garantie d'acheminement des informations, par exemple : "Fast Ethernet", ATM ("Asynchronous Transfer Mode")...

L'aéronautique (civil et militaire), le spatial, la marine et le nucléaire apparaissent cependant comme des domaines d'utilisation privilégiés.

### Brève description des dessins

La figure 1 illustre un modèle de noeud d'extrémité.

La figure 2 illustre la gigue (Jitter) pour un flux régulier.

Les figures 3A à 3C illustrent la position des trames à l'intérieur de leur fenêtre de gigue.

La figure 4 illustre un modèle de commutateur.

Les figures 5A à 5G illustrent le positionnement de la fenêtre glissante pour un exemple (BAG, Jitter In) .

La figure 6 illustre un exemple de topologie.

La figure 7 illustre le nombre de liens virtuels pour la topologie illustrée sur la figure 6.

Les figures 8A et 8B illustrent un exemple d'agrégation de liens virtuels.

La figure 9 illustre un exemple de réalisation dans le domaine avionique.

**Exposé détaillé de modes de réalisation**

L'invention concerne un procédé de vérification du comportement déterministe d'un réseau à commutation de paquet. Ce procédé permet de garantir qu'un tel réseau possède un comportement déterministe, au sens où tout paquet émis sur le réseau à partir d'un noeud source rejoint le ou les noeuds destinataires avec une durée qui est bornée dans le temps. Un tel procédé s'applique à tous les réseaux basés sur la commutation de paquets ou de trames ou de cellules. Il permet d'affirmer que la configuration d'un réseau, au travers des tables de routages des commutateurs et des flux de trames qui les traversent, est conforme avec un fonctionnement déterministe.

Dans la suite de la description, on appelle noeud d'extrémité ou "End System" un noeud d'un réseau qui est capable de générer et de recevoir des trames mais qui n'est pas un noeud intermédiaire (commutateur, routeur, pont,...) chargé d'acheminer les trames dans le réseau. Lorsqu'un noeud intermédiaire est la source d'un flux de trames qui est destiné à un ou plusieurs noeuds d'extrémité, il se comporte comme noeuds d'extrémité.

Un lien virtuel (VL) est une connexion logique entre un noeud d'extrémité source et un ou plusieurs noeuds d'extrémité destination.

Chaque lien virtuel possède une valeur propre appelé intervalle d'allocation de bande passante ("Bandwidth Allocation Gap" ou BAG), dont l'unité est la seconde, qui représente le temps minimum séparant deux trames consécutives appartenant au lien virtuel en question et ce avant leur émission sur le support physique.

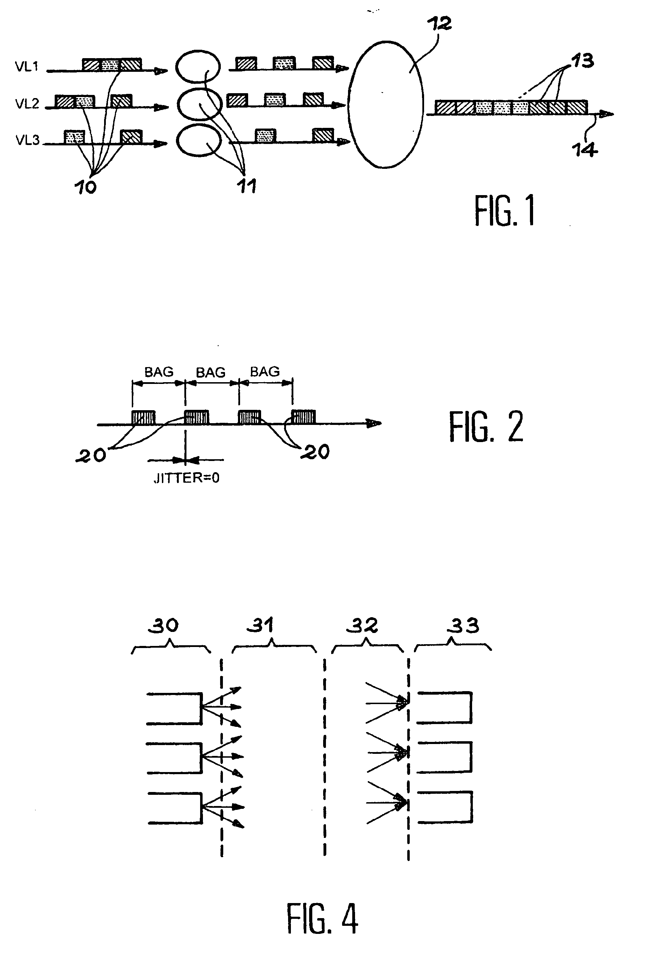

Un modèle de noeud d'extrémité est illustré sur la figure 1. En entrée on a des flux irréguliers de paquets 10 en provenance des applications (flux asynchrones entre les liens virtuels VL1, VL2, VL3). Les flux de paquets sont ensuite régulés grâce à des régulateurs 11 correspondant chacun à un lien virtuel afin d'espacer les paquets d'un intervalle BAG. Un multiplexeur 12 permet ensuite de délivrer un flux de trames 13 sur le support physique 14.

La gigue(ou "Jitter") associée à un lien virtuel représente l'intervalle de temps entre l'instant théorique d'émission d'une trame (rapport au BAG) et son émission effective qui peut être avant ou après l'instant théorique.

Le flux de trames d'un lien virtuel est entièrement caractérisé par le couple (BAG, Jitter max) où le Jitter max est la valeur maximale du Jitter instantané qu'il est possible d'obtenir pour ce lien virtuel.

Dans la suite, le terme Jitter se réfère au Jitter max.

Pour un lien virtuel dont le flux est maximal (toujours une trame à émettre) et régulier, on a une trame 20 exactement à chaque intervalle BAG, comme illustré sur la figure 2. La gigue associée à ce lien virtuel est nulle.

Dans le cas général, le début d'émission d'une trame peut se trouver à n'importe quel endroit à l'intérieur de l'intervalle Jitter. En fait, si la trame 1 est retardée au passage dans le commutateur, puis quelques instants après la trame 2 du même lien virtuel est très peu retardée alors la valeur BAG n'est plus respectée. Le flux de trames d'un même lien virtuel possède donc une certaine gigue par rapport à la valeur BAG.

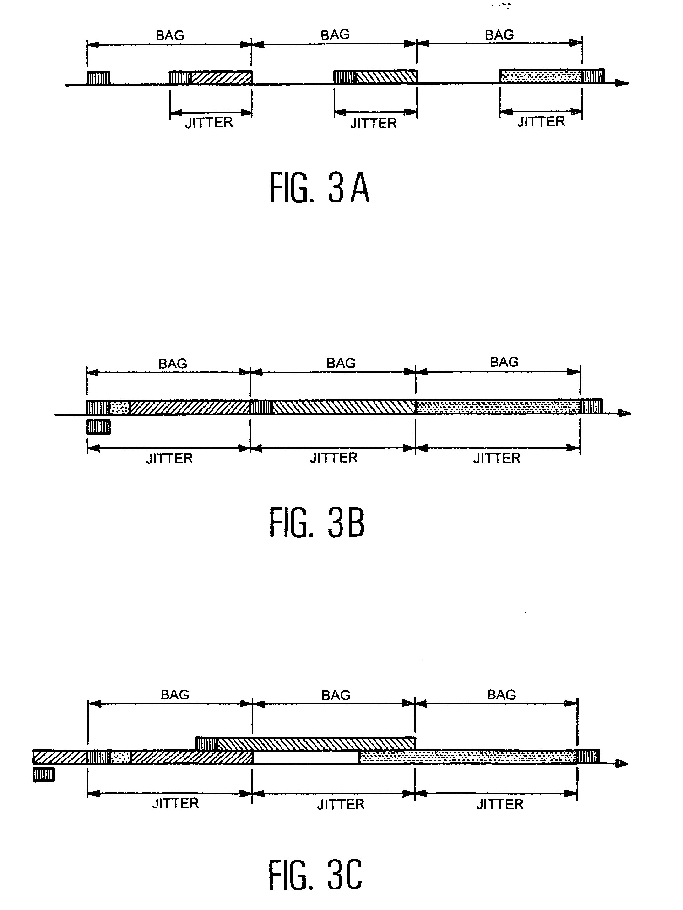

Les trois cas illustrés sur les figures 3A, 3B et 3C montrent la position des trames à l'intérieur de leur fenêtre de gigue.

La figure 3A illustre le cas Jitter<BAG.

La figure 3B illustre le cas Jitter=BAG. Lorsque Jitter=BAG, il y a une possibilité purement théorique de recouvrement d'une trame par une trame très en avance. Or, l'ordre d'émission étant garanti, cette possibilité est interdite car une trame émise après une autre trame ne peut chevaucher ou dépasser de façon temporelle cette dernière. Il y a donc apparition de deux trames côte à côte (appelé rafales de trame ou "burst").

La figure 3C illustre le cas Jitter>BAG. Les gigues se chevauchent mutuellement et la trame 2 est transmise juste après la trame 1. Il y a apparition d'un "burst".

La gigue associée à chaque lien virtuel en sortie d'un noeud d'extrémité, qui vaut Jitter ES est due à la contention qui s'opère à la sortie du noeud d'extrémité où plusieurs flux régulés veulent avoir accès au même registre FIFO ("First in-First out") de sortie. Sa valeur dépend entre autre du nombre de liens virtuels liés au noeud d'extrémité.

Ainsi tous les liens virtuels sortant d'un noeud d'extrémité ont pour caractéristiques (BAG, Jitter ES).

Un modèle de commutateur est illustré sur la figure 4, avec des "buffers" ou tampons d'entrée 30, un démultiplexeur 31, un multiplexeur 32, et des "buffers" de sortie 33.

D'après ce modèle, on voit qu'en fonction de la configuration du commutateur (table de

"forwarding") et des caractéristiques des flux des liens virtuels arrivant dans les ports d'entrée, il y a "plus ou moins" de contention pour l'accès aux ports de sortie. Cette contention a pour effet de générer des délais donc une pollution sur la caractéristique du flux de chaque lien virtuel au niveau des ports de sortie.

En fonction de la charge instantanée d'un commutateur, une trame peut soit y rester un temps minimal (latence minimum) ou soit y rester un temps maximal (latence maximum du commutateur) ou soit toute durée intermédiaire.

Si la caractéristique du flux d'un lien virtuel entrant dans le commutateur est (BAG, Jitter In) alors la perturbation majorante générée par le commutateur donne une nouvelle caractéristique pour le flux du même lien virtuel en sortie de commutateur : (BAG, Jitter Out (avec Jitter Out = Jitter In + latence max.

Afin de démontrer le déterminisme, il est nécessaire de dimensionner la taille des "buffers" de sortie pour ne perdre aucune trame avec pour point de départ une configuration de commutateur donnée et les caractéristiques des liens virtuels traversant le commutateur.

Pour un lien virtuel donné, possédant la caractéristique (BAG, Jitter In), la formule donnant le nombre max de trames associées à ce lien virtuel qu'il peut y avoir pendant une fenêtre glissante FG d'une durée de T secondes est :

$$\mathtt{N \ = \ 1 \ + \ int}\left(\frac{\mathtt{Jitter \ In \ + \ T}}{\mathtt{BAG}}\right) \quad \mathtt{unit\acute{e} \ = \ trames \ par \ fen\hat{e}tre \ glissante \ T}$$

où la fonction int(x) est la fonction partie entière de x (pour arrondir à l'entier inférieur)

- pour x de [0,1[, int(x)=0
- pour x de [1,2[,int(x)=1
- ....

Si par exemple, on se donne un intervalle de référence T=1 ms, cette formule implique :

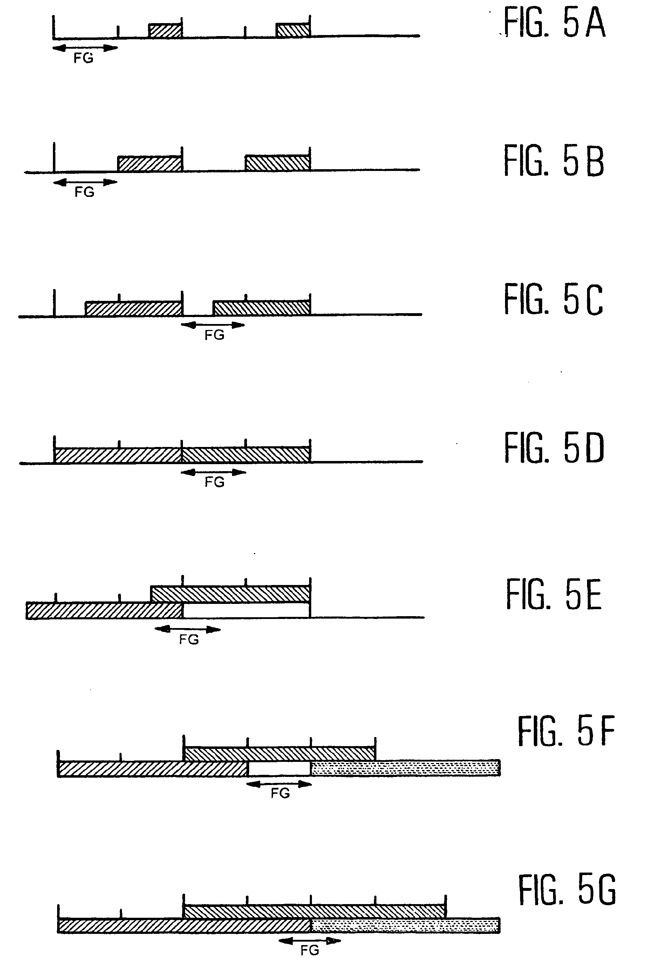

- BAG+2 ms/Jitter In=0,5 ms$\Rightarrow$1+int((0,5+1)/2)=1 trame max/ms (voir la figure 5A)

- BAG=2 ms/Jitter In=1 ms$\Rightarrow$1+int((1+1)/2)=2 trames max/ms (voir la figure 5B). Dans ce cas, deux événements d'émission trame peuvent être présents pendant 1 ms et donc deux trames complètes peuvent se trouver dans le buffer (on aurait pu penser qu'il n'y avait qu'une seule trame pendant 1 ms).

- BAG=2 ms/Jitter In= 1,5 ms$\Rightarrow$1+int((1,5+1)/2)=2 trames max/ms (voir la figure 5C)

- BAG=2ms/Jitter In=2 ms$\Rightarrow$1+int((2+1)/2=2 trames max/ms (voir figure 5D)

- BAG=2 ms/Jitter In=2,5 ms$\Rightarrow$1+int((2,5+1)/2)=2 trames max/ms (voir la figure 5E)

- BAG=2 ms/Jitter In= 3 ms$\Rightarrow$1+int((3+1)/2)=3 trames max/ms (voir la figure 5F)

- BAG=2 ms/Jitter In=4 ms$\Rightarrow$1+int((4+1)/2)=3 trames max/ms (voir la figure 5G).

Pour éviter une congestion du buffer de sortie d'un commutateur et ainsi ne jamais perdre de trames, il faut pour chaque port de sortie d'un commutateur et pour tous les commutateurs d'un réseau, que l'inégalité suivante soit vérifiée :

$$\sum_{\substack{i=\text{nombre de liens virtuels} \\ \text{traversant le buffer}}} \left[1+\text{int}\left(\frac{\left(\text{Jitter In}\right)_i+\text{Latence max}}{\text{BAG}_i}\right)\right] * \left(\text{durée trame max}\right)_i \leq \text{Latence max}$$

La valeur latence max est la durée maximale de résidence dans le buffer de sortie d'un commutateur et elle peut être différente pour chaque commutateur du réseau. La partie de gauche représente la durée de toutes les trames de tous les liens virtuels qui peuvent résider dans le buffer de sortie d'un commutateur en prenant pour fenêtre glissante la durée latence max. Si cette inégalité est vérifiée alors il n'y a pas congestion et la caractéristique du flux d'un lien virtuel se trouve transformée de (BAG, Jitter In) en (BAG, Jitter Out=Jitter In + latence max). En d'autres termes, la configuration du commutateur est en accord avec les performances du commutateur (latence max).

Application à un réseau simple

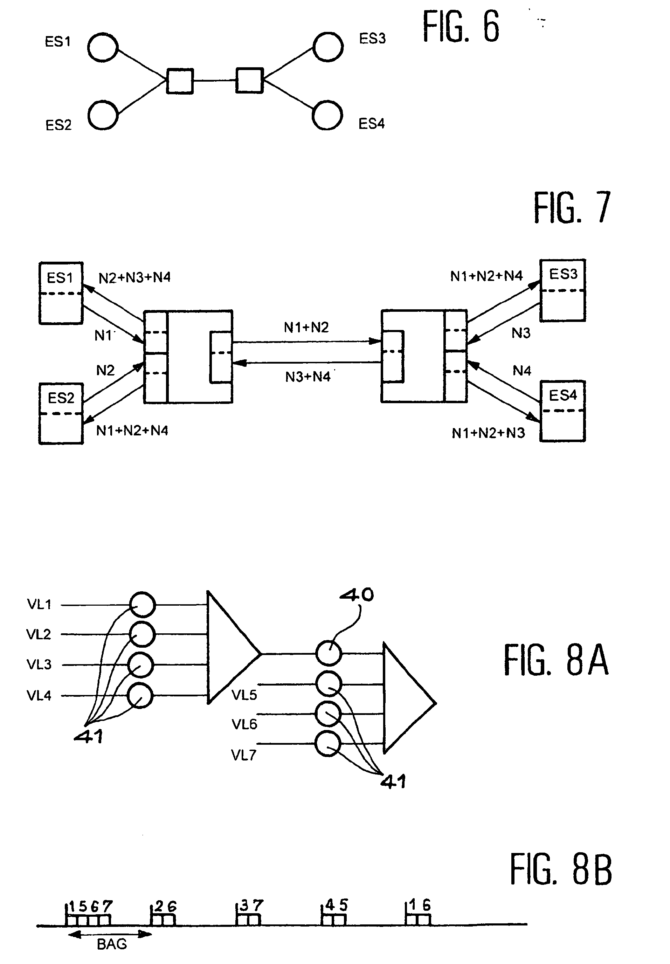

Une topologie est illustrée sur la figure 6. On considère que chaque noeud d'extrémité ES1, ES2, ES3 ou ES4 possède des liens virtuels qui vont vers tous les autres noeuds d'extrémité (cas de "broadcast"). Chaque noeud d'extrémité possède un nombre identique Ni de liens virtuels avec pour caractéristiques BAG=2 ms et Jitter ES= 0,5 ms.
Le schéma représentant le nombre Ni de lien virtuels sur chaque lien simple est illustré sur la figure 7.
Les calculs sont les suivants :

Sur les deux liens centraux :

$N1[1+int((0,5+1)/2)*15,52+N2[1+int((0,5+1)/2)]*15,52<1000 \mu s$
$(N1+N2)*15,52<1000 \mu s$

Il en est de même sur l'autre lien :

$(N3+N4)*15,52<1000 \mu s$

Sur le lien montant vers ES1, on a :

$N2[1+int((0,5+1)/2)*15,52+N3[1+int((1,5+1)/2)]*15,52+N4 [1+int((1,5+1)/2)]*15,52<1000 \mu s$
$N2*15,52+2*(N3+N4)*15,52<1000 \mu s$

Il en est de même sur les autres liens montants avec les noeuds d'extrémité appropriés.
D'autre part, on a l'équation : N1=N2=N3=N4, d'où

$5.N1.15,52<1000 \mu s$
N1=N2=N3=N4=12 liens virtuels

Le nombre de liens virtuels sur un lien montant vers un noeud d'extrémité est donc de 3*12=36 liens virtuels. Une taille de trame de 174 octets donne un débit physique pour un lien virtuel à BAG=2 ms de : 1000/2*(174+20)*8=776 000 bit/s. D'où 36 liens virtuels correspondent à un débit physique de 36*776 000=27,936 Mbit/s
Il apparaît que le majorant de la perturbation engendrée par un commutateur choisi a divisé par plus de 3 le débit physique théorique que l'on aurait pu trouver sur le lien (100 Mbits/s).
Il est particulièrement important de noter qu'un lien virtuel avec un BAG de 128 ms coûte pour le réseau autant qu'un lien virtuel avec un BAG de 4 ms par exemple (si la gigue est inférieure à 2). Ceci est dû au 1 dans la formule 1+int(Jitter+T)/BAG.
Dans un autre mode de réalisation avantageux du procédé de l'invention, on utilise une démarche incrémentale : on ajoute les liens virtuels un à un, en vérifiant après chaque ajout d'un lien virtuel que le fonctionnement de l'ensemble du réseau reste bien déterministe.

Agrégation de liens virtuels

Pour remédier au désavantage décrit ci-dessus, une optimisation possible est d'agréger plusieurs liens virtuels pour former un seul super lien virtuel qui sert de base dans le calcul de non-congestion.
On entend par agrégation le fait de re-réguler plusieurs liens virtuels de grand BAG avec une valeur de faible BAG pour faire comme si les liens virtuels de faible débit se comportaient comme un seul lien virtuel de plus grand débit.
Un exemple est illustré sur la figure 8A. On a quatre liens virtuels VL1, VL2, VL3 et VL4 à BAG=2 ms et trois liens virtuels VL5, VL6 et VL7 à BAG=8 ms.
Le premier 40 des sept régulateurs 41 joue le rôle de lisseur pour les liens virtuels à BAG=8 ms. Comme la gigue de 0,5 ms est garanti pour le flux en sortie de ce régulateur alors les liens virtuels à BAG=8 ms possèdent également la même valeur de gigue. Par contre, il est clair que ce modèle génère plus de latence pour les liens virtuels à BAG=8 ms.
Pour que le lissage soit possible, il faut vérifier la condition de non saturation du premier régulateur:

$$\text{Nombre de liens virtuels à lisser x BAG lissage} \leq \min(\text{BAG}_{\text{lien virtuel}})$$

Cette agrégation de liens virtuels n'entraîne aucune perte de ségrégation. Elles permet d'obtenir un flux de paquets illustré sur la figure 8B, les numéros indiqués étant ceux des liens virtuels.

En utilisant le procédé de l'invention, il est donc tout à fait possible d'avoir un grand nombre de liens virtuels sur un lien physique tout en conservant la propriété de non congestion évoquée.

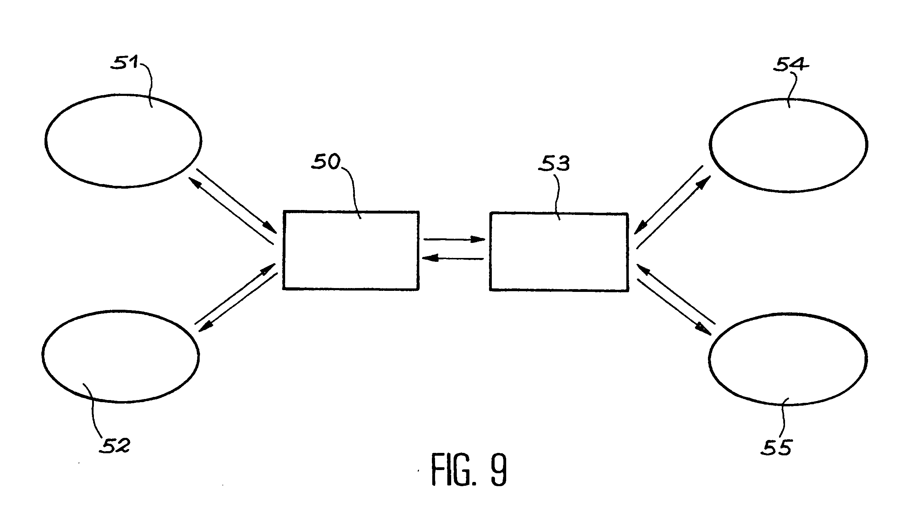

La figure 9 illustre un exemple de réalisation dans le domaine avionique permettant de mettre en oeuvre le procédé de l'invention. Dans cet exemple, un premier commutateur 50 est relié d'une part à un premier écran graphique 51 (paramètres de vol) et à un second écran graphique (paramètres de vol et maintenance), et d'autre part à un second commutateur 53 lui-même relié à un générateur de paramètres de vol 54 et à un calculateur de maintenance avion 55.

## REFERENCES

[1] "Queuing delays in rate controlled networks" de Barnejea et S. Keshav (Proceedings of IEEE INFOCOM'93, pages 547-556, San Francisco, CA, Avril 1993).

[2] "A calculus for network delay" de R. Cruz (Part 1 Network elements in isolation. IEEE Transaction of Information Theory, 37(1), pages 121-141, 1991)

[3] "A calculus for network delay" de R. Cruz (Part II: Network analysis. IEEE Transaction of Information Theory, 37 (1), pages 121-141, 1991).

## Revendications

**1.** Procédé de vérification du comportement déterministe d'un réseau à commutation de paquets comprenant des stations abonnés reliées entre elles au travers d'au moins un commutateur, un tel comportement étant dit déterministe au sens que tout paquet émis sur le réseau à partir d'une station abonné source rejoint la (ou les) station(s) abonné (s) destinataire(s) avec une durée qui est bornée dans le temps, **caractérisé en ce que** l'on vérifie l'inégalité suivante pour chaque port de sortie de chaque commutateur du réseau :

$$\sum_{\substack{i=\text{nombre de liens virtuels} \\ \text{traversant le buffer}}} \left[ 1 + \text{int}\left( \frac{(\text{Jitter In})_i + \text{Latence max}}{\text{BAG}_i} \right) \right] * (\text{durée trame max})_\lambda \leq \text{Latence max}$$

dans laquelle :

- la valeur Latence max est la durée maximale de résidence dans le buffer de sortie d'un commutateur, cette valeur pouvant être différente pour chaque commutateur du réseau.
- BAGi représente le temps minimum séparant deux trames consécutives appartenant à un lien virtuel i, et ce avant leur émission sur le support physique.
- (Jitter In)i est le Jitter associé à un lien virtuel i, qui représente l'intervalle de temps entre l'instant théorique d'émission d'une trame et son émission effective qui peut être avant ou après l'instant théorique.
- (durée trame max)i est la durée de la trame la plus longue sur le lien virtuel i.

**2.** Procédé selon la revendication 1, dans lequel on ajoute les liens virtuels un à un, en vérifiant après chaque ajout d'un lien virtuel que le fonctionnement de l'ensemble du réseau reste bien déterministe.

**EP 1 309 140 B1**

## Claims

1. Process for checking the deterministic behavior of a packet switching network comprising subscriber stations connected to each other through at least one switch, this behavior being said to be deterministic in the sense that any packet sent on the network from a source subscriber station reaches the destination subscriber station(s) within a duration that is limited in time, and **characterized in that** the following relation is satisfied for each output port from each switch on the network:

$$\sum_{\substack{i.\ number\ of\ virtual\ links \\ passing\ through\ the\ buffer}} \left[ 1 + \mathrm{int}\left(\frac{(Jitter\ In)_i\ i\ +\ max\ Latency}{BAGi}\right)\right] * (max\ frame\ duration) \leq max\ latency$$

in which:

- the max latency value is the maximum residence time in the output buffer of a switch, this value may be different for each switch in the network.
- BAGi is the minimum time between two consecutive frames belonging to a vertical link i, before they are transmitted on the physical support.
- (Jitter In)i is the Jitter associated with a virtual link i that represents the time interval between the theoretical instant at which a frame is transmitted, and its effective transmission which may be before or after the theoretical instant.
- (max frame duration) i is the duration of the longest frame on the virtual link i.

2. Process according to claim 1, in which the virtual links are added one by one, checking that the behavior of the entire network remains deterministic after each addition of a virtual link.

## Patentansprüche

1. Prüfverfahren des deterministischen Verhaltens eines Netzes mit Datenpaketumschaltung, Teilnehmerstationen umfassend, die untereinander über mindestens einen Umschalter verbunden sind, wobei ein solches Verhalten als deterministisch in dem Sinne bezeichnet wird, dass jedes in dem Netz von einer Quell-Teilnehmerstation gesendete Datenpaket an dem/den Ziel-Teilnehmerstationen(en) mit einer Zeitdauer ankommt, die zeitlich begrenzt ist, **dadurch gekennzeichnet, dass** die folgende Ungleichung für jeden Ausgangsport jedes Netzumschalters überprüft wird:

$$\sum_{\substack{i = Anzahl\ von\ den\ Puffer\ durch- \\ laufenden\ virtuellen\ Verbindungen}} \left[ 1 + \mathrm{int}\left(\frac{(JitterIn)_i + Latenz\max}{BAGi}\right)\right] * (Datenblockdauer\max)_i \leq Latenz\max$$

wobei:

- der Wert Latenz max die maximale Verweildauer in dem Ausgangspuffer eines Umschalters ist, wobei dieser Wert für jeden Netzumschalter unterschiedlich sein kann,
- BAGi die Minimalzeit darstellt, welche zwei aufeinanderfolgende Datenblöcke trennt, die zu einer virtuellen Verbindung i gehören, und zwar vor ihrem Senden auf dem physikalischen Träger,
- (JitterIn)i der Jitter bzw. die Signalschwankung ist in Zusammenhang mit einer virtuellen Verbindung i ist, welche das Zeitintervall zwischen dem theoretischen Augenblick des Sendens eines Datenblocks und seinem tatsächlichen Sendevorgang ist, der vor oder nach dem theoretischen Augenblick liegen kann,
- (Datenblockdauer max)i die Dauer des längsten Datenblocks in der virtuellen Verbindung i ist.

2. Verfahren nach Anspruch 1, wobei die virtuellen Verbindungen der Reihe nach hinzugefügt werden, indem nach jeder Hinzufügung einer virtuellen Verbindung überprüft wird, ob die Funktionsweise des gesamten Netzes deterministisch geblieben ist.

VL1

VL2

VL3

10    11

12

13

14

FIG. 1

BAG    BAG    BAG

20    20

JITTER=0

FIG. 2

30    31    32    33

FIG. 4

FIG. 3A

FIG. 3B

FIG. 3C

FIG. 5 A

FIG. 5 B

FIG. 5 C

FIG. 5 D

FIG. 5 E

FIG. 5 F

FIG. 5 G

FIG. 6

FIG. 7

FIG. 8A

FIG. 8B

FIG. 9

## RÉFÉRENCES CITÉES DANS LA DESCRIPTION

**Littérature non-brevet citée dans la description**

- **BARNEJEA ; S. KESHAV.** Queuing delays in rate controlled networks. *Proceedings of IEEE INFO-COM'93,* Avril 1993, 547-556
- **R. CRUZ.** A calculus for network delay. *Network elements in isolation. IEEE Transaction of Information Theory,* 1991, vol. 37 (1), 121-141

- **R. CRUZ.** A calculus for network delay. *Network analysis. IEEE Transaction of Information Theory,* 1991, vol. 37 (1), 121-141